# EUROPÄISCHE PATENTSCHRIFT

(11) **EP 2 568 480 B1**
(45) Veröffentlichungstag und Bekanntmachung des Hinweises auf die Patenterteilung: **30.10.2019**
(21) Anmeldenummer: 12183296.8
(22) Anmeldetag: 06.09.2012
(51) Int. Cl.: H01C 7/02, H02H 9/06

(54) **Überspannungsschutzgerät**
Overvoltage protection device
Appareil de protection contre les surtensions

(30) Priorität: 08.09.2011 DE 102011053415
(43) Veröffentlichungstag der Anmeldung: 13.03.2013
(73) Patentinhaber: PHOENIX CONTACT GmbH & Co. KG, 32825 Blomberg (DE)
(72) Erfinder: Durth, Rainer, 32805 Horn-Bad Meinberg (DE); Meyer, Thomas, 31868 Ottenstein (DE); Cerny, Joachim, 33699 Bielefeld (DE)
(74) Vertreter: Michalski Hüttermann & Partner Patentanwälte mbB

(56) Entgegenhaltungen:
- DE-A1- 2 405 671
- DE-A1- 10 211 796
- DE-A1-102007 015 933

## Beschreibung

Überspannungsschutzgeräte insbesondere des Typs 1 werden an leistungsfähigen Stromnetzen eingesetzt. Diese Überspannungsschutzgeräte stellen einen Grobschutz in der Gebäudeeinspeisung dar und sollen beispielsweise den Energieinhalt eines Blitzes ableiten und die verbleibende Restspannung auf Werte kleiner als 1300 bis 6000 V begrenzen können. Diese Belastung wird durch einen Referenzstromstoß abgebildet. Dieser Referenzstromstoß weist beispielsweise einen Strom von 50 bzw. 100 kA mit einer Impulsform 10/350 µs auf. Eine andere beispielhafte Impulsform ist die 8/20 µs Impulsform. Dabei sorgt der Überspannungsschutz für den Potentialausgleich, wobei die maximale Spannungsdifferenz zwischen den Zuleitern einen bestimmten Schutzpegel nicht überschreiten darf. Für diesen Zweck wurden in der Vergangenheit Varistoren und Funkenstrecken eingesetzt. Der Vorteil der Funkenstrecken liegt in der geringen Lichtbogenbrennspannung, welche den Schutzpegel definiert bei gleichzeitig hoher Stoßstromtragefähigkeit Dieser Vorteil ist jedoch mit einem entscheidenden Nachteil verbunden. Funkenstrecken weisen auf Grund der geringen Lichtbogenbrennspannung auch eine schlechte Begrenzung und Löschfähigkeit von Netzfolgeströmen auf. Typischerweise erlöschen die Funkenstrecken erst dann, wenn der Strom unter den sogenannten Haltestrom sinkt, z.B. bei einem Nulldurchgang einer Wechselspannung. Diese Eigenschaft führt dazu, dass vorgeschaltete Vorsicherungen auslösen und damit die Verfügbarkeit einer geschützten Anlage beeinträchtigen, da nun zuerst die Vorsicherungen zu wechseln sind.

Zur Lösung dieses Problems wurden in der Vergangenheit Funkenstrecken mit einer erhöhten Lichtbogenbrennspannung vorgeschlagen, die dadurch in der Lage sind einen Netzfolgestrom besser zu unterdrücken. Diese Erhöhung wurde durch Kühlung des Lichtbogens oder einen hohen Druckaufbau in der Funkenstrecke oder durch Lichtbogenvervielfachung erreicht. Diese Funkenstrecken weisen jedoch als Nachteil auf, dass sie einen stark erhöhten Energieumsatz aufweisen, der geforderten kleinen Baugrößen entgegensteht. Ein weiterer Nachteil ist, dass diese Funkenstrecken vergleichsweise teuer sind.

In diesem Zusammenhang ist aus der DE 10 2007 015 933 A1 eine Überspannungsschutzeinrichtung für den Einsatz in Gleichstromnetzen bekannt. Die Überspannungsschutzeinrichtung umfasst eine energetisch koordinierte Parallelschaltung eines ersten Ableitpfads und eines zweiten, triggerbaren Ableitpfads, welche jeweils ein unterschiedliches Ansprechverhalten, bezogen auf Störereignisse und Überspannungen, aufweisen. Der erste Ableitpfad weist einen Varistor auf, dessen Restspannungswert erfasst wird und auf eine Steuerschaltung gelangt, um die energetische Belastung des ersten Ableitpfads zu ermitteln. Der zweite Ableitpfad weist eine triggerbare Funkenstrecke auf, deren Triggereingang mit einem ersten Ausgang der Steuerschaltung in Verbindung steht. Dem ersten und zweiten Ableitpfad ist ein dritter Zweig als Kommutierungs- und Löschpfad parallel geschaltet, welcher einen Kurzschlussschalter, der einen Leistungstransistor aufweist, enthält. Der Steuereingang des Kurzschlussschalters ist an einem zweiten Ausgang der Steuerschaltung angeschlossen. Der zweite Ableitpfad mit Funkenstrecke wird über die Steuerschaltung aktiviert, wenn eine anhand der Restspannungsüberwachung erkannte energetische Überlastung des ersten Ableitpfads zu erwarten ist. Zur Netzfolgestromunterdrückung wird der Kurzschlussschalter im dritten Zweig für einen vorgegebenen Zeitraum nach Ablauf einer Verzögerungszeit, gerechnet vom Ansprechen der Funkenstrecke im zweiten Ableitpfad an, geschlossen.

Weiterhin ist aus der DE 102 11 796 A1 eine multifunktionale Überspannungsschutzeinrichtung für Blitzschutz-Potentialausgleichs- und Erdungssysteme mit Kurzschluß- und/oder Strombegrenzungsmitteln bekannt. Die Vorrichtung umfasst eine von einer Netz- und Versorgungsspannung unabhängige Selektionsbaugruppe, die die zwischen dem zu schützenden Systemteil und Erde auftretenden Überspannungsereignisse nach ihrem zeitlichen Verlauf sowie Höhe der jeweiligen Spannungswerte überwacht und bewertet, um dynamische/transiente einerseits und statische/stationäre, auch periodisch wiederkehrende Ereignisse andererseits zu erkennen. Je nach Ereignis wird ein dynamischer Kurzschlußschalter oder ein statischer Kurzschlußschalter, gegebenenfalls nacheinander, aktiviert.

Auch ist aus der DE 24 05 671 A1 eine Schaltungsanordnung zum Begrenzen von Uberspannungen, insbesondere für gleichstromführenden Leitungen, unter Verwendung von wenig·tens einem Überspannungsbegrenzer, der einer zu schützenden Einrichtung parallel geschaltet ist, bekannt. Jedem Überspannungsbegrenzer ist im Längszweig (Nutzstromkreis) und/oder im Querzweig ein nichtlinearer Vorwiderstand in Reihe geschaltet, der nach Zündung des Uberspannungsbegrenzers infolge Eigen- oder Fremderwärmung von einem niederohmigen in einen hochohmigen Widerstandsbereich übergeht.

Der Erfindung liegt die Aufgabe zu Grunde, eine verbesserte Anordnung bereitzustellen, die die bekannten Nachteile von Funkenstrecken mit geringer Lichtbogenbrennspannung löst ohne die Nachteile von Funkenstrecken mit erhöhter Lichtbogenbrennspannung in Kauf zu nehmen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Nachfolgend wird die Erfindung unter Bezugnahme auf die anliegende Zeichnung anhand bevorzugter Ausführungsformen näher erläutert.

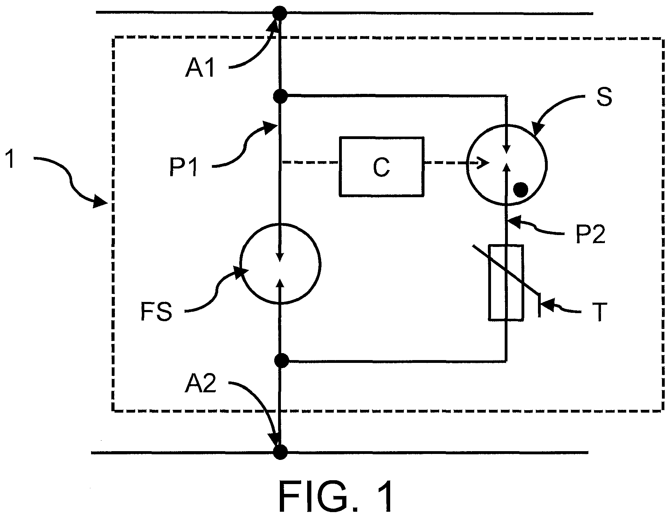

Es zeigt
- Fig. 1: eine schematische Darstellung eines Überspannungsschutzgerätes gemäß einer bevorzugten Ausführungsform der Erfindung.

Die Figur 1 zeigt ein Überspannungsschutzgerät 1. Dieses Überspannungsschutzgerät 1 ist als gestricheltes Rechteck angedeutet. Das Überspannungsschutzgerät 1 weist in allgemeinster Form einen ersten Anschluss A1 und einen zweiten Anschluss A2, die an den Zuleitern zu einem elektrischen Gerät angeordnet sind, auf. Zwischen dem ersten Anschluss A1 und dem zweiten Anschluss A2 befinden sich ein erster Ableitpfad P1 und ein zweiter Ableitpfad P2. Dieser erste Ableitpfad P1 und dieser zweite Ableitpfad P2 bilden eine Parallelschaltung. Weitere alternative parallele Ableitpfade können vorgesehen sein.

Der erste Ableitpfad P1 weist eine Funkenstrecke FS auf. Der zweite Ableitpfad weist in allgemeinster Form einen triggerbaren Schalter S und einen Thermistor T auf. Der triggerbare Schalter S und der Thermistor T sind in Serie geschaltet. Weiterhin weist das Überspannungsschutzgerät 1 eine Steuereinrichtung C auf, welche basierend auf den Zustand und/oder den Verlauf des Zustandes des ersten Ableitpfades P1 infolge eines Ableitereignisses, den triggerbaren Schalter S zur Durchschaltung veranlasst.

Ein Stoßstrom zündet die Funkenstrecke FS. Diese Zustandsänderung wird durch die Steuereinrichtung C erkannt. Weiterhin kann die Steuereinrichtung C den zeitlichen Verlauf des Stromes durch den Ableitpfad P1 erkennen. Ist der impulsförmige Strom (transientes Ereignis) weitgehend abgeklungen und wird der Strom durch P1 nun im Wesentlichen durch den Netzfolgestrom getragen veranlasst die Steuereinrichtung C den triggerbaren Schalter S zum durchschalten. Dies kann z.B. zeitverzögert nach Erkennen des Ableitfalles veranlasst werden. Hierdurch wird der Ableitpfad P2 aktiviert. Da der Thermistor T zunächst kalt ist, ist der Thermistor niederohmig. Hierdurch wird der Großteil des Stromes bzw. der gesamte Strom von Ableitpfad P1 zum Ableitpfad P2 kommutieren. Dies führt dazu, dass der Strom im Ableitpfad P1 unter den Haltestrom für die Funkenstrecke FS im Ableitpfad P1 sinkt und damit der Stromfluss im Ableitpfad P1 unterbrochen wird. Der weitere Stromfluss im Ableitpfad P2 führt zu einer Erwärmung des Thermistors T. Infolge der Erwärmung des Thermistors T steigt der Widerstand des Thermistors T an. In der Folge davon steigt die Spannung am Thermistor an während die Spannung am in Serie liegenden Schalter abnimmt. Je nach Art des triggerbaren Schalters S unterschreitet nun der Strom im Ableitpfad P2 einen Haltestrom des triggerbaren Schalter S bzw. die Spannung am Schalters unterschreitet eine Haltespannung und führt so zu einem passiven Löschen des Netzfolgestromes oder aber der Strom im Ableitpfad P2 ist soweit abgesunken bzw. durch den Anstieg des Widerstandes am Thermistor T begrenzt, dass der Strom unter Einfluss der Steuereinrichtung durch Ausschalten des Schalters S aktiv gelöscht wird. Da der Thermistor T erst dann verwendet wird, wenn der Strom letztendlich im Wesentlichen noch dem Netzfolgestrom entspricht, kann der Thermistor T für kleinere Ströme ausgelegt werden, so dass kostengünstige Thermistoren T eingesetzt werden können. Weiterhin, da an das Eigenlöschvermögen nun geringere Anforderungen zu stellen sind, kann auch für die Funkenstrecke FS auf kostengünstigere Funkenstrecken zurückgegriffen werden.

Hierdurch wird auf einfache Weise eine Schaltung für ein Überspannungsschutzgerät zur Verfügung gestellt, welche zum einen die Vorteil einer Funkenstrecke aufweist, zum anderen aber eine günstige Lösung des Netzfolgestroms und seiner Löschbarkeit des Netzfolgestromes zur Verfügung stellt.

In besonders vorteilhafter Weise kann der Thermistor T als ein PTC ausgebildet sein, ohne auf eine bestimmte Bauart, wie z.B. keramisch oder als leitfähiges Polymer, beschränkt zu sein. Jedoch sind andere Kaltleiter alternativ einsetzbar. Besonders vorteilhaft sind Thermistoren T, die im kalten Zustand einen Widerstand von weniger als 1 Ohm, z.B. weniger als 500 mOhm aufweisen.

Weiterhin vorteilhaft kann der der Thermistor T so dimensioniert sein, dass ein Stromfluss durch den Thermistor T diesen soweit erwärmt, so dass der Strom begrenzt wird.

In einer besonders vorteilhaften Ausgestaltung ist der Schalter S ein triggerbarer ÜSAG.

Weiterhin kann die Steuereinrichtung C alternativ oder zusätzlich so eingerichtet sein, dass sie erkennt, dass ein abgeleiteter Strom betragsmäßig abnimmt.

In einer weiteren vorteilhaften Ausbildung kann die Steuereinrichtung C an Hand von gemessenen Spannungspegeln und/oder Erwärmungsprofile und/oder Frequenzkomponenten im Ableitpfad erkennen, dass die Triggerung des Ableitpfades P2 veranlasst werden soll.

Hierdurch kann noch präziser ermittelt werden, wann ein Impulsereignis im Wesentlichen zu Ende ist und der Strom tatsächlich überwiegend ein Netzfolgestrom ist.

Alternativ oder zusätzlich kann in einer Ausführungsform der Erfindung vorgesehen sein, dass die Steuereinrichtung C zeitlich verzögert eine Durchschaltung veranlasst. Ist die Steuerungseinrichtung C z.B. dazu vorgesehen, dass sie sowohl den zeitlichen Verlauf als auch das Ableitereignis an sich überwacht, kann vorgesehen sein, dass als Auffangverfahren immer nach Eintritt eines Ableitereignisses der Schalter S getriggert wird. Dabei wird diese (Zwangs-) Triggerung zeitlich so gewählt, dass der Zeitpunkt in aller Regel nach dem zu erwartenden Einsetzen einer Triggerung in Folge eines erkannten Abklingens eines Impulsstrom und dem Erkennen, dass der Strom im Wesentlichen vom Netzfolgestrom getragen wird, einsetzt, d.h. in aller Regel der Schalter S schon getriggert sein sollte. Sollte dann aus irgendeinem Grund die Erkennung des Netzfolgestromes fehlerhaft sein, wird auf Grund der (Zwangs-) Triggerung der Schalter zeitlich gesteuert aktiviert und die Löschung der Funkenstrecke FS im Ableitpfad angestoßen.

### Bezugszeichenliste

| | |
|---|---|
| Überspannungsschutzgerät | 1 |
| erster Anschluss | A1 |
| zweiter Anschluss | A2 |
| erster Ableitpfad | P1 |
| zweiter Ableitpfad | P2 |
| Funkenstrecke | FS |
| Triggerbarer Schalter | S |
| Thermistor | T |
| Steuereinrichtung | S |

## Patentansprüche

1. Überspannungsschutzgerät (1) aufweisend
• einen ersten Anschluss (A1) und einen zweiten Anschluss (A2), wobei zwischen dem ersten und dem zweiten Anschluss zumindest ein erster Ableitpfad (P1) und ein zweiter Ableitpfad (P2) angeordnet ist, wobei der erste Ableitpfad (P1) eine Funkenstrecke (FS) aufweist, und der zweite Ableitpfad einen triggerbaren Schalter (S) und einen Thermistor (T) in Serienschaltung aufweist,
• eine Steuereinrichtung (C), welche basierend auf den Zustand und/oder den Verlauf des Zustandes des ersten Ableitpfades (P1) infolge eines Ableitereignisses, den triggerbaren Schalter (S) zur Durchschaltung veranlasst,
**dadurch gekennzeichnet, dass**
die Steuereinrichtung (C) an Hand von Erwärmungsprofilen und/oder Frequenzkomponenten erkennt, dass die Triggerung des zweiten Ableitpfades (P2) veranlasst werden soll.

2. Überspannungsschutzgerät nach Anspruch 1, **dadurch gekennzeichnet, dass** der Thermistor (T) ein PTC ist.

3. Überspannungsschutzgerät nach Anspruch 1 oder 2,
**dadurch gekennzeichnet, dass** der Thermistor (T) so dimensioniert ist, dass ein Stromfluss durch den Thermistor (T) diesen soweit erwärmt, so dass der Strom begrenzt wird.

4. Überspannungsschutzgerät nach einem der vorhergehenden Ansprüche, **dadurch gekennzeichnet, dass** der Schalter (S) ein ÜSAG ist.

5. Überspannungsschutzgerät nach einem der vorhergehenden Ansprüche, **dadurch gekennzeichnet, dass** die Steuereinrichtung (C) erkennt, dass ein abgeleiteter Strom betragsmäßig abnimmt.

6. Überspannungsschutzgerät nach einem der vorhergehenden Ansprüche, **dadurch gekennzeichnet, dass** die Steuereinrichtung (C) an Hand von gemessenen Spannungspegeln erkennt, dass die Triggerung des zweiten Ableitpfades (P2) veranlasst werden soll.

7. Überspannungsschutzgerät nach einem der vorhergehenden Ansprüche, **dadurch gekennzeichnet, dass** die Steuereinrichtung (C) zeitlich verzögert eine Durchschaltung veranlasst.

8. Überspannungsschutzgerät nach einem der vorhergehenden Ansprüche, **dadurch gekennzeichnet, dass** die Steuereinrichtung (C) erkennt, ob der abzuleitende Strom ein Netzfolgestrom ist und dann den triggerbaren Schalter zur Durchschaltung veranlasst

## Claims

1. A surge protection device (1) comprising
• a first connection (A1) and a second connection (A2), wherein at least one first discharge path (P1) and one second discharge path (P2) are arranged between the first and the second connection, wherein the first discharge path (P1) comprises a spark gap (FS) and the second discharge path comprises a triggerable switch (S) and a thermistor (T) connected in series,
• a control unit (C), which induces the triggerable switch (S) to switch on based on the state and/or the course of the state of the first discharge path (P1) as a result of a discharge event,
**characterised in that**
the control unit (C) identifies that the triggering of the second discharge path (P2) should be induced on the basis of heating profiles and/or frequency components.

2. The surge protection device according to claim 1, **characterised in that** the thermistor (T) is a PTC.

3. The surge protection device according to claim 1 or 2, **characterised in that** the thermistor (T) is dimensioned such that a flow of current through the thermistor (T) heats the thermistor to such an extent that the current is limited.

4. The surge protection device according to any one of the preceding claims, **characterised in that** the switch (S) is a surge arrester.

5. The surge protection device according to any one of the preceding claims, **characterised in that** the control unit (C) identifies that the value of a discharged current is decreasing.

6. The surge protection device according to any one of the preceding claims, **characterised in that** the control unit (C) identifies that the triggering of the second discharge path (P2) should be induced on the basis of measured voltage levels.

7. The surge protection device according to any one of the preceding claims, **characterised in that** the control unit (C) induces the switch to switch on in a time-delayed manner.

8. The surge protection device according to any one of the preceding claims, **characterised in that** the control unit (C) identifies whether the current to be discharged is a follow current and then induces the triggerable switch to switch on.

## Revendications

1. Appareil de protection contre les surtensions (1) présentant
• une première connexion (A1) et une deuxième connexion (A2), où au moins un premier trajet de décharge (P1) et un deuxième trajet de décharge (P2) sont disposés entre les première et deuxième connexions, le premier trajet de décharge (P1) présentant un éclateur (FS) et le deuxième trajet de décharge présentant un commutateur déclenchable (S) et une thermistance (T) dans un circuit en série,
• un dispositif de commande (C), lequel, sur la base de l'état et/ou de l'évolution de l'état du premier trajet de décharge (P1) suite à un événement de décharge, active le commutateur déclenchable (S) pour l'interconnexion,
**caractérisé en ce que**
le dispositif de commande (C), identifie à l'aide de profils de réchauffements et/ou de composants de fréquence si le déclenchement du deuxième trajet de décharge (P2) doit être activé.

2. Appareil de protection contre les surtensions selon la revendication 1, **caractérisé en ce que** la thermistance (T) est une thermistance à coefficient de température positif PTC.

3. Appareil de protection contre les surtensions selon la revendication 1 ou la revendication 2, **caractérisé en ce que** la thermistance (T) est dimensionnée de telle manière qu'un flux de courant à travers la thermistance (T), échauffe celle-ci jusqu'à ce que le courant soit limité.

4. Appareil de protection contre les surtensions selon l'une des revendications précédentes, **caractérisé en ce que** le commutateur (S) est un parasurtenseur rempli de gaz ÜSAG.

5. Appareil de protection contre les surtensions selon l'une des revendications précédentes, **caractérisé en ce que** le dispositif de commande (C) identifie si un courant de décharge diminue quantitativement.

6. Appareil de protection contre les surtensions selon l'une des revendications précédentes, **caractérisé en ce que** le dispositif de commande (C) identifie, à l'aide de niveaux de tensions mesurés, si le déclenchement du deuxième trajet de décharge (P2) doit être activé.

7. Appareil de protection contre les surtensions selon l'une des revendications précédentes, **caractérisé en ce que** le dispositif de commande (C) active une interconnexion décalée dans le temps.

8. Appareil de protection contre les surtensions selon l'une des revendications précédentes, **caractérisé en ce que** le dispositif de commande (C) identifie si le courant à décharger est un courant de fuite et active ensuite le commutateur déclenchable pour l'interconnexion.
